# EUROPEAN PATENT SPECIFICATION

(11) **EP 1 057 576 B1**
(45) Date of publication and mention of the grant of the patent: **12.11.2003**
(21) Application number: 00304563.0
(22) Date of filing: 30.05.2000
(51) Int. Cl.: B23K 20/12, B61D 17/04

(54) **A method of manufacturing a structual body with friction stir welding**
Herstellungsverfahren eines strukturellen Körpers mit drehendem Reibungschweissen
Methode de fabrication d'une structure par soudage par friction à mouvement cyclique

(30) Priority: 31.05.1999 JP 15112999; 31.05.1999 JP 15113099; 31.05.1999 JP 15113199
(43) Date of publication of application: 06.12.2000
(60) Divisional application: 03001519.2
(73) Proprietor: Hitachi, Ltd., Chiyoda-ku, Tokyo 101-8010 (JP)
(72) Inventor: Masakuni, Ezumi, Kudamatsu-shi, Yamaguchi 744-0002 (JP); Kazusige, Fukuyori, Kudamatsu-shi, Yamaguchi 744-0031 (JP); Akihiro, Satou, Hitachi-shi, Ibaraki 316-0006 (JP)
(74) Representative: Paget, Hugh Charles Edward

(56) References cited:
- EP-A- 0 579 500
- EP-A- 0 797 043
- DE-C- 19 624 776
- PATENT ABSTRACTS OF JAPAN vol. 1999, no. 12, 29 October 1999 (1999-10-29) & JP 11 179568 A (NIPPON LIGHT METAL CO LTD), 6 July 1999 (1999-07-06)
- PATENT ABSTRACTS OF JAPAN vol. 1999, no. 05, 31 May 1999 (1999-05-31) & JP 11 047858 A (NIPPON LIGHT METAL CO LTD), 23 February 1999 (1999-02-23)
- PATENT ABSTRACTS OF JAPAN vol. 1998, no. 12, 31 October 1998 (1998-10-31) & JP 10 193140 A (SHOWA ALUM CORP), 28 July 1998 (1998-07-28)

## Description

The present invention relates to a method of manufacturing a structural body by friction stir joining method and is applicable, for example, to manufacture of a car body of a railway vehicle.

Friction stir joining is a method wherein a rotating round rod (called "rotary tool") inserted into a joint zone is moved along the joining line and the joint zone is heated, softened and solid-fluidized, so that a solid phase joining takes place.

The rotary tool comprises a small diameter portion which is inserted into the joint zone, and a large diameter portion which is positioned adjacent the small diameter portion. The small diameter portion and the large diameter portion of the rotary tool are coaxial. The boundary or shoulder between the small diameter portion and the large diameter portion of the rotary tool is inserted a little way into the joint zone. The axis of the rotary tool may be inclined rearwardly with respect to the advancing direction of the tool during joining.

In the manufacture of a car body of a railway vehicle it is known to carry out friction stir joining of extruded frame members, e.g. aluminium alloy members. The longitudinal direction of the extruded frame member is directed in the longitudinal direction of the car body, while the width direction of the extruded frame member is the circumferential direction of the car body. In the side of the car body with such a construction an opening such as a window is provided. See JP-A-09-309164 (EP-A-0797043), which is also considered to represent the most relevant state of the art.

Since the height of a window of a car body is larger than the width of an extruded frame member, the window is formed in two or three frame members. For this reason, extruded frame members in which a cut-off portion or portions are provided substantially corresponding to the window are arranged together and joined.

A friction stir joining apparatus for manufacturing the car body comprises a bed for mounting the extruded frame members and a traveller in which plural rotary tools are mounted. By the traveller plural rotary tools are moved and plural extruded frame members are joined simultaneously.

If plural extruded frame members are joining simultaneously by rotary tools which are mounted below the traveller, when a first rotary tool reaches a position of a window, this rotary tool is retreated from the extruded frame members, and the friction stir joining is stopped, while a second rotary tool for joining a portion where the window does not exist continues the friction stir joining. When the traveller reaches the other end of the window, the first rotary tool is inserted into the joining zone starts friction stir joining again. In this process, when the first rotary tool is inserted to the joining zone, a defect in the joint can be generated easily. Further, at the beginning of the friction stir joining, since the temperature is not raised a large insertion force may be needed for inserting the rotary tool into the joining zone. In addition, since the rotary tool is moved to insert it, a slant force is generated at a bearing member of the rotary tool. The bearing member should be large, and the life of the rotary tool may be short.

### Summary of the Invention

A first object of the present invention is to achieve good quality joining in a case where plural joining lines are joined simultaneously by friction stir joining, and there is a portion where the members being joined are gapped alongside a non-gapped portion. A second object is to reduce the time required for such a joining operation.

The invention provides a method according to claim 1.

Further embodiments of the present invention are defined in the dependent claims.

### Brief Description of Drawings

Fig. 1 is a diagram of a method of manufacturing a structural body in one embodiment according to the present invention;
Fig. 2 is a flowchart of the method of one embodiment according to the present invention;
Fig. 3 is a longitudinal cross-sectional view showing portions of a structural body being made by a : method of the present invention;
Fig. 4 is a perspective view showing a friction stir joining apparatus used in one embodiment of the present invention;
Fig. 5 is a perspective view showing a car body of a railway vehicle which may be made by the present invention; and
Fig. 6 is a diagram of a method of manufacturing a structural body in another embodiment of the present invention.

### Description of the Embodiments

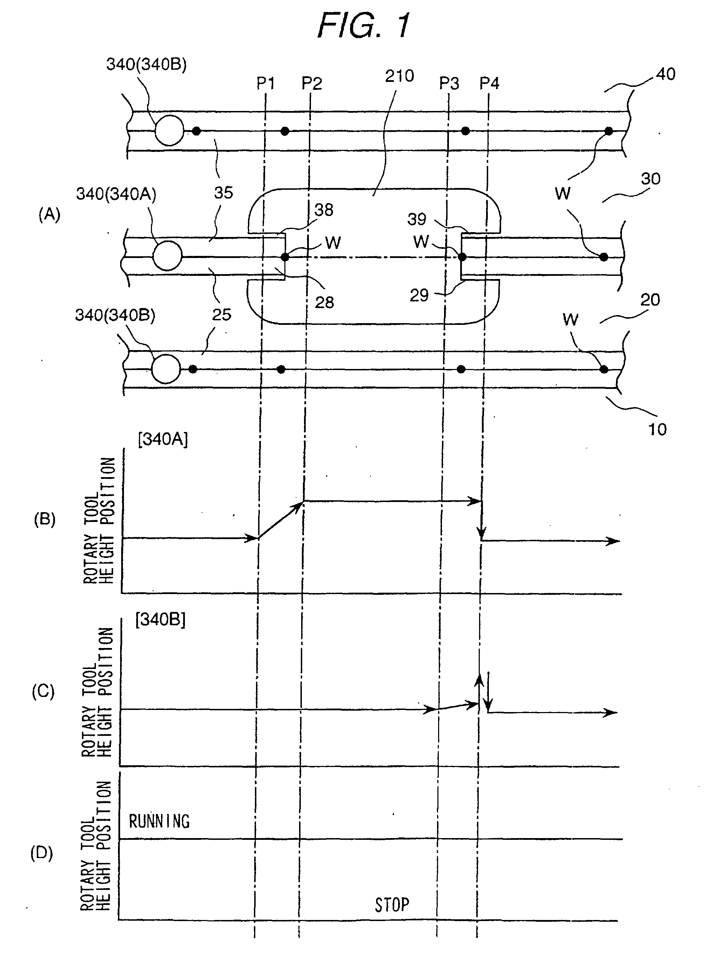

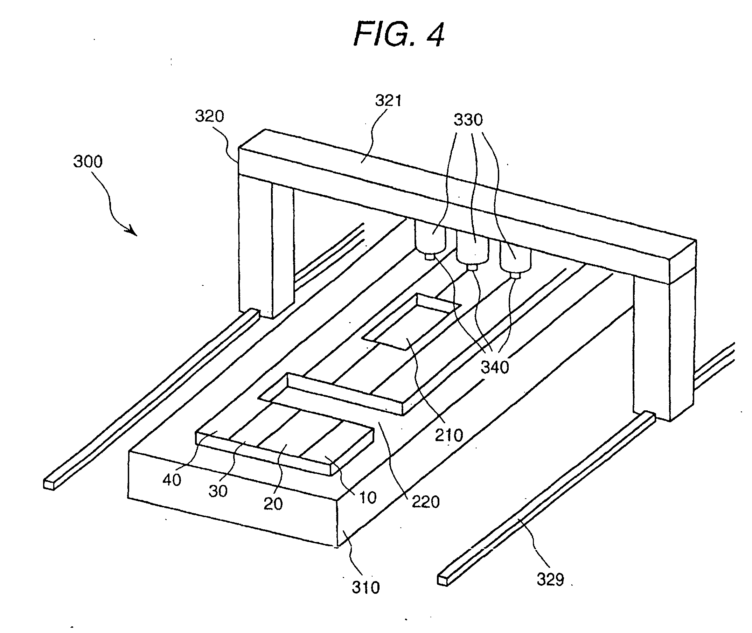

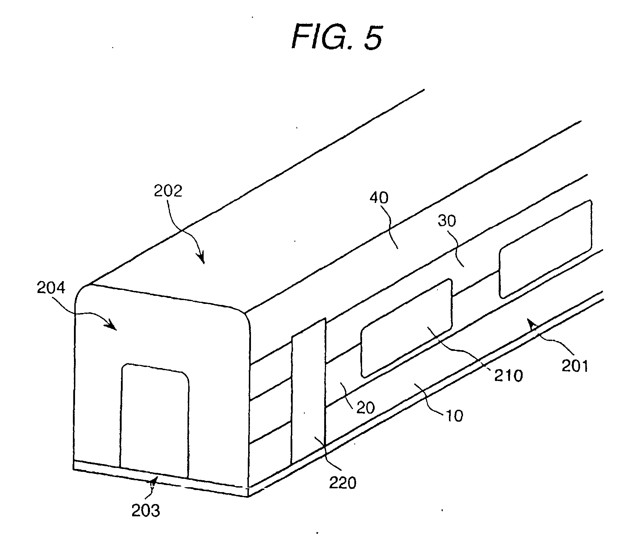

Figs. 1 to 5 show manufacture of a railway vehicle car body as an example of the invention. As shown in Fig. 5, the car body comprises a side structural body 201 as a side face, a roof structural body 202 as a roof, a floor frame 203, and an end structural body 204 as an end portion in the longitudinal direction of the car body.

The side body 201, the roof body 202, and the floor frame 203 are constituted respectively by joining plural extruded frame members. The longitudinal (extrusion) direction of each frame member is directed in the longitudinal direction of the car body. The material of the extruded frame member is an aluminium alloy.

As shown in Fig. 5, the side body 201 comprises extruded frame members 10, 20, 30, 40. In the extruded frame members 20, 30, a window 210 is present. An inlet and outlet port or door port 220 of the side body 201 is present in all the extruded frame members 10, 20, 30, 40. At the inlet and outlet port 220, after the extruded frame members 10, 20, 30, 40 have been joined, in many cases a frame is welded. The same may apply to the window 210. The extruded frame members 10, 20, 30 thus cut completely at the inlet and outlet port 220.

This side body 201 is shown to be of the four extruded frame members 10, 20, 30, 40, but when using hollow extruded frame members, the side body 201 may be made of extruded frame members. Further, if the window 210 is constituted by three extruded frame members, the central frame member at the window is cut at an intermediate position.

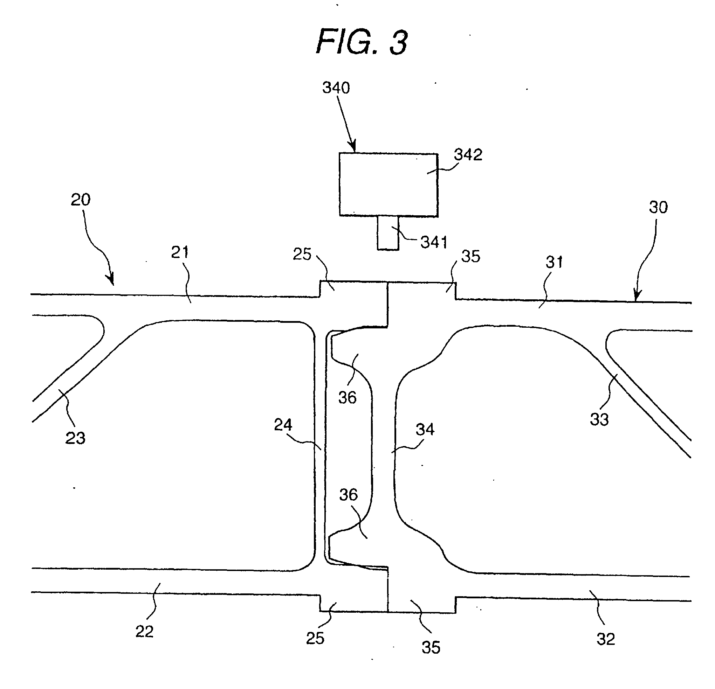

Fig. 3 shows the extruded frame members 20, 30. The other frame members 10, 40 are similar. The extruded frame members 20, 30 are hollow frame members.

The hollow frame member 20 comprises two face plates 21, 22, plural ribs 23 connecting the plates 21, 22 arranged in a truss manner and a supporting rib or plate 24 connecting the two face plates 21, 22 at an end portion (a joining portion) in a width direction of the hollow frame member 20. The hollow frame member 30 comprises two face plates 31, 32, plural ribs 33 connecting the plates 31, 32 arranged in a truss manner and a supporting rib or plate 34 connecting the two face plates 31, 32 at an end portion (a joining portion) in the width direction of the hollow frame member 30.

At the end portion (the joining portion) of each of the face plates 21, 22, a raised portion 25 projecting above (away from) the face plate is provided. At the end portion (the joining portion) of each of the face plates 31, 32, similarly a raised portion 35 projecting above the face plate is provided. At the end portion the hollow frame member 30, has laterally projecting ribs 36 for insertion into the opposed hollow frame member 20 between the face plates 21, 22 to form seats for supporting the insertion force of the rotary tool 340.

The width of the raised portions 25 and 35 are the same. The opposed end faces of the raised portions 25, 35 are arranged in the extension of the plate thickness of the supporting plate 34. The axis of the rotary tool 340 of the friction stir joining apparatus 330 is at the end faces of the raised portions 25, 35.

The extruded frame members 10, 20, 30, 40 of the side body 201 are mounted on a bed 310 of the friction stir joining apparatus 300 and fixed to the bed 310. Above the fixed extruded frame members a travelling frame 320 runs on rails 329 of both sides of the bed 310. Under a girder or beam 321 of the frame 320 three friction stir joining units 330 are mounted, with the rotary tools 340 at their lower ends. The respective friction stir joining units 330 can independently perform travel along the beam 321, ascent and descent of the rotary tool 340 and rotation of the rotary tool 340.

Each friction stir joining unit 330 has an optical sensor, which detects the distance from the top faces of the raised portions 25, 35 and sets the insertion depth of the rotary tool 340 at a predetermined value. Further, the optical sensor detects the width position of the raised portions 25, 35 and sets the axis of the rotary tool 340 to coincide with the centre thereof.

In the extruded frame members 20, 30 in which a window 210 is provided, openings of substantially the window shape are provided at the position of the window in advance, by cutting the frame members 20, 30.

The frame members 10, 20, 30 in which the port 220 is located are cut and arranged with a gap for the port 220. In the frame member 40 at the upper end of the port 220, an opening having substantially the desired port shape is provided at the position of the port 220 in advance, by cutting the frame member 40.

The cutting openings for the window 210 will be explained. The joint zone of the two frame members 20, 30 has a start and a finish of the joining line at the window 210. The frame members 20, 30 are cut at the vicinity of the joining line to leave flanges 28, 38 and 29, 39 which project into the window 210. A width cf the respective flanges 28, 38 and 29, 39 is chosen to include the supporting plates 24, 34 and the raised portions 25, 35. Cutting at the port 220 is carried out similarly. The frame members 10, 20, 30, 40 are cut to leave respective flanges 28, 38 and 29, 39. Further, the such flanges 28, 38 and 29, 39 are provided respectively at both ends in the longitudinal direction of the side body 201.

When the hollow frame members 10, 20, 30, 40 are fixed to the bed 310 the raised portions 25, 35 of the abutting portions of the frame members are joined intermittently and temporarily along the joining lines by arc welding. The end-faces of the chips 28, 38, 29, 39 at the start and finish points of the joining line are joined temporarily. "W" in Fig. 1 shows these temporary welding positions. In particular, the temporary welding W of the start end is carried out on upper faces of the raised portions 25, 35 and on the end faces in the longitudinal direction of the frame members 10, 20, 30, 40. The range of the temporary welding at the end is from the upper faces of the raised portions 25, 35 to the flanges 36. The temporary fixing welding "W" does not provide a V shape groove but provides an I shape groove.

In this condition, friction stir joining is started from one longitudinal end of the frame members is started. The rotating rotary tools 340 are descended and inserted into the raised portions 25, 35 at the starting end of the joining lines. As Fig. 1 shows at line P4 for the tool 340A in the case of the window opening, the insertion position into the flanges 28, 29, 38, 39 etc. is in each case located towards the finish end of the joining line with respect to the temporary weld "W", i.e. is slightly spaced from the weld "W".

The end of the small diameter portion 341 of the rotary tool 340 is inserted into the upper face of the projecting rib 36. The position of the lower end of the large diameter portion 342 of the rotary tool 340 is between the level of the outer faces of the face plates 21, 31 and the top of the raised portions 25, 35, i.e. within the height extent of the raised portions. The position of the axis of the rotary tool 340 is between the two raised portions 25, 35. The small diameter portion 341 of the rotary tool 340 is a screw member.

When the rotary tools 340 on the traveller 320 are inserted to the predetermined depths, the movement of the traveller 320 with plural friction stir joining devices 330 is started and the friction stir joining is carried out.

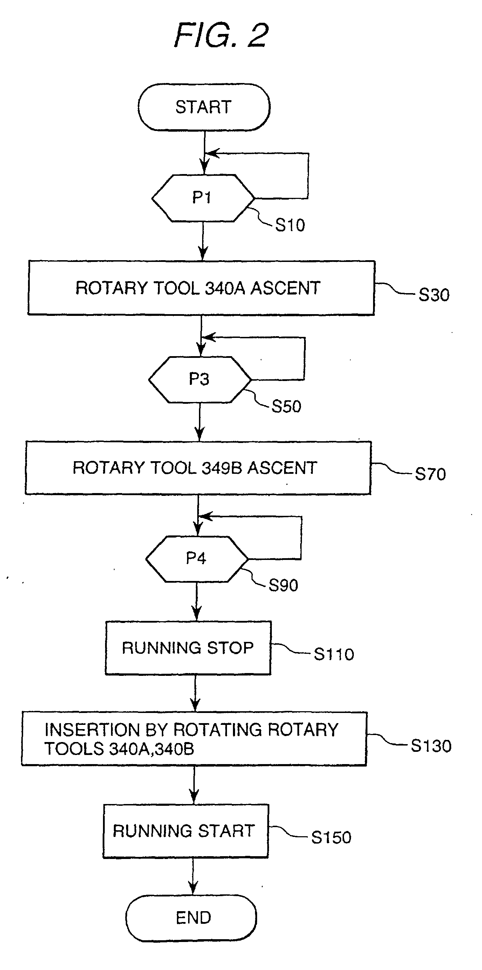

Next, operation of the friction stir joining apparatus 330 at the window 210 and the port 220 will be explained referring to Figs. 1 and 2. The rotary tool 340 on the joining line intersecting the window 210 is indicated as "340A" and the rotary tool 340 of the joining line having no window 210 is indicated as "340B". The rotary tools 340A and 340B are arranged on the same transverse line, and move from left to right in Fig. 1.

The friction stir joining advancing from the left end of the extruded frame members when the rotary tools 340A and 340B reach the position P1 in the flanges 28 and 38 of the window 210, the tool 340A is retreated upwardly while rotating. The travel of the tools is continued. For this reason, the rotary tool 340A ascends gradually. The position P1 is determined by the travel speed of the traveller 320, and is determined in advance. See step S10 and step S30 in Fig. 2. After the friction stir joining, the flanges 28, 38 are cut off. For this reason, the position P1 is selected such that upstream from it there is no concern about the joint depth from the strength aspect.

The rotary tool 340B where there is no window 210 is not raised, but continues the friction stir joining as it travels.

Since the rotary tool 340A is raised while travelling, without stopping of the travel of the tools 340A and 340B, time can be saved.

When the rotary tool 340A has ascended to a predetermined position (a position P2), its rotation is stopped. In the raised position of the tool 340A the tool is above the level of the raised portions 25, 35.

When the rotary tools 340A and 340B approach the location of the other end of the window 210, namely a predetermined position P3 before the end of the flanges 29, 39 a shallow ascent (retreat) of the rotary tool 340B starts. This travel of the traveller 320 continues. The joint depth of the rotary tool 340B reduces gradually. See step S50 and step S70 in Fig. 2.

When the position P4 which is in the longitudinal extent of flanges 29, 39 is reached, the traveller 320 is made to stop. Since the ascent of the rotary tool 340B is continued, it is pulled out completely from the joint. At the position P4, the ascent speed of the rotary tool 340B may be increased. The position P4 is positioned downstream from the temporary welding portion W at the extremity of the flanges 29, 39. See step 90 and step 110 in Fig. 2.

The distance between the position P3 and the position P4 is, for example, 50 mm. The ascent distance of the rotary tool 340B between the position P3 and the position P4 is, for example, 0.5 mm. The joint depth is reduced, but the minimum joint depth, is selected so that there is no problem from the viewpoint of the joint strength.

When the rotary tool 340B is pulled completely out, at the joining portion a hole which corresponds to the diameter of the small diameter portion 341 of the rotary tool 340 is formed. Next, at the position P4, all rotary tools 340A and 340B are rotated and lowered, to be inserted to the predetermined depth. See step S130. The rotary tool 340B is inserted into the hole which it left, to the regular depth, which is the same as before the position P3, i.e. before the start of the ascent of the tool 340B. Namely, at the position P4, the insertion depth is to where the previous friction stir joining is stopped plus 0.5 mm, i.e. 0.5 mm below the bottom of the hole which is generated when the rotary tool 340B is pulled out.

At this condition, the travel of the rotary tools is restarted, and the friction stir joining is started again, at the regular depth. See step S150.

Thus in the position P4, friction stir joining is restarted at the hole which is formed by pulling out the rotary tool 340B. For this reason, the hole is buried by the metal of the raised portions 25, 35 which form a material source. Further, since the restarting position of the lower end of the rotary tool 340B is lower than the bottom end of the hole and since the lower portion of the hole is joined fully, the occurrence of a defect at this location can be avoided. In particular, since the metal at the lower portion of the hole is stirred fully by the rotary tool 340B, a defect at the centre portion of the bottom end of the hole can be avoided. Since any defect may occur at the central portion of the bottom end of the hole, the defect amount is not large, from the aspect of the strength aspect a fully effective joint can be obtained.

Since the insertion position of the rotary tool 340A is formed at a location downstream from the temporary weld W of the end of the flanges 29, 39, a gap at the joining line is not significantly widened. Accordingly, good joining can be carried out.

At the next window 210, the operation is similar. At the inlet and outlet port 220 the ascent and the descent of the rotary tools 340 is also carried out similarly. It is of course not necessary that all rotary tools 340 are arranged on the same transverse line.

After joining has carried out to the further end of the structure, the body comprised of the plural hollow frame members is reversed (turned over) and friction stir joining is carried out in a similar manner on the other side, at face plates 22, 32. The residual raised portions at the outer face side of the car body are cut off and to make the outer face at the joint zones flush with the adjacent surface of the face plates.

If with the above described insertion depth of the tool 340B at the position P4 there is a risk of a defect, the rotary tool 340B is inserted more deeply, to make joining portion more thick. After the travel starts again, at a subsequent position P5 (or after a predetermined time) the rotary tool 340B is raised to the regular insertion depth.

This ascent and other movements of the rotary tools 340 are carried out by a height position control function of the rotary tools 340. The height position control function determines the height position of the raised portions 25, 35 by means of the sensor and from this makes the insertion depth from the raised portions 25, 35 a predetermined value. In this way, all rotary tools 340 are brought to the regular condition.

Another alternative operation is as follows. The friction stir joining is carried out with the regular insertion depth to the position P4 and at the position P4 the rotary tool 340B is pulled out. Next, at the position P4 the rotary tools 340A and 340B are inserted again. The insertion depth of the rotary tool 340A is the regular amount. The insertion depth of the rotary tool 340B is larger than the regular amount, by for example 0.5 mm. The travel of the rotary tools 340A and 340B is restarted, and at a subsequent position (or after a predetermined tine), the ascent of the rotary tool 340B starts. The ascent speed is slow, while travel of the traveller 320 continues. The joining depth according to the rotary tool 340B becomes shallow gradually. When the rotary tool 340B has ascended to the predetermined position (the insertion depth before the position P4), the ascent of the rotary tool 340B is stopped. Accordingly, all the rotary tools 340A and 340B achieve the regular condition.

The positions P1, P2, P3 and P4 can be managed according to by measured time periods, or by position measurement.

At the position when the rotary tool 340B is pulled out and then the rotary tool 340 can be inserted immediately, however with some reasons after the running body 320 is made to run, at the position P4 the rotary tools 340A and 340B can be inserted.

As described at the position P4, the rotary tool 340B is pulled out and re-inserted to the hole which is thus formed. However it is possible to insert the rotary tool 340B upstream of the position P4. In this case, the insertion amount during the second insertion of the rotary tool 340B is made the same as that during the previous joining operation.

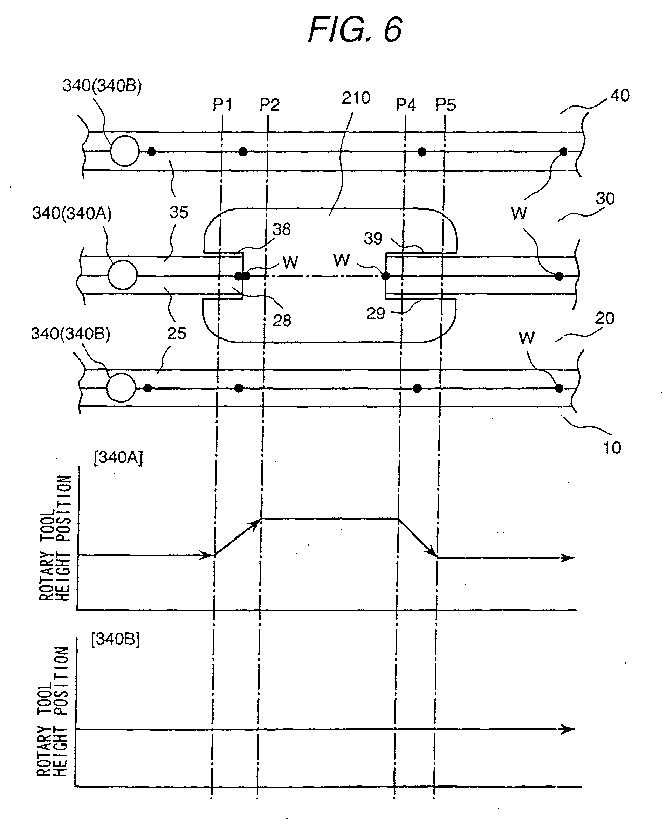

In the embodiment of Fig. 6, when the rotary tools 340A, 340B reach the further end of the window 210, i.e. reach the flanges 29, 39, the rotary tool 340A is descended while rotating and inserted to a predetermined depth. The insertion position P4 of the rotary tool 340A into the flanges 29, 39 is beyond on the downstream side of the temporary welding portion W. Since the rotary tool 340A descends while travelling, the joint depth increases gradually. When the insertion depth reaches a predetermined amount, the descent of the rotary tool 340A is stopped (position P5). Then friction stir joining with the regular depth is carried out. The-position P5 where the insertion depth of the rotary tool 340A becomes regular is in the flanges 29 and 39. After joining, the flanges 29, 39 are cut off. The insertion depth of the rotary tool 340A is controlled according to the optical sensor.

Since the rotary tool 340A is descended while travelling, there is no stopping of the travel of the rotary tools 340A and 340B, so that the joining time can be shortened.

Since the insertion position P4 of the rotary tool 340A is beyond the temporary welding portion of the flanges 29, 39, the gap at the joint line is not much enlarged. For this reason, good welding can be carried out. There is a risk that the gap between the two members at the insertion position (at the initiation of the joining line) may be enlarged, but in these embodiments not only the upper faces of the raised portions 25, 35 but also the ends of the flanges 29, 39 in the thickness direction are joined by the temporary welding W. Accordingly, the flanges are firmly joined, and the enlargement at the initiation of friction stir joining can be prevented.

Flanges similar to the flanges 29, 39 may be provided at the first end portions of the hollow frame members 20, 30, namely at the first insertion positions of the rotary tools 340A and 340B arranged similarly to those of Fig. 6. In comparison with the case of the temporary welding only at the upper face of-the hollow frame member, the length of the flange can be shortened. Accordingly, the length of the hollow frame member can be shortened.

According to the present invention, in the case where the joining line having the plural lines is subjected to carry out at the same time with the friction stir joining and in the case where the portion in which the members to be subjected to the joining is not existed and the portion in which the friction stir joining is unnecessary and the portion for joining are mingled with, when the second time joining is made to start, the good friction stir joining can be obtained and the joining can be carried out at the short time.

## Claims

1. A method of manufacturing a structural body, comprising the steps of:
starting friction stir joining of a plurality of members (10, 20, 30, 40) abutting side-by-side, by inserting respective rotary tools (340) at two joining lines which are spaced laterally with respect to the direction of joint forming, and travelling the tools in concert along the respective joining lines to join the members along the joining lines;
at a first position (P1), stopping the friction stir joining at a first one of said joining lines by withdrawing a first one (340A) of said tools (340) from the first joining line, the first tool (340A) continuing to accompany the travel of a second one (340B) of said tools (340) which continues to form a joint;
at a second position (P4) spaced from the first position, reinserting said first rotary tool (340A) into the joining material to recommence its friction stir joining action.

2. A method according to claim 1, wherein at said second position (P4), the travel of said tools (340) is stopped and said second tool (340B) is withdrawn from the joining material, and thereafter said first and second tools (340A, 340B) are inserted again at each joining line and friction stir joining is started again by starting the travel of the tools (340).

3. A method according to claim 2, wherein after the withdrawal of said second tool (340B) at said second position (P4), the tools (340A, 340B) are reinserted at said second position (P4).

4. A method according to claim 3, wherein the reinsertion depth of said second tool (340B) at said second position (P4) is deeper than its insertion depth immediately before its withdrawal at said second position (P4).

5. A method according to claim 2, wherein after withdrawal of said second tool (340B) at said second position (P4), the position of reinsertion of said tools (340A, 340B) is upstream from said second position (P4) with respect to the travel direction.

6. A method according to claim 4 or 5, wherein
at a third position (P3) upstream of the second position (P4) in the travel direction, withdrawal of said second tool (340B) is started and the friction stir joining by said second tool (340B) is continued while withdrawing said second tool (340B);
at said second position (P4), the travel of said tools (340) is stopped and the friction stir joining by said second tool (340B) is stopped by fully withdrawing said second rotary tool (340B) from said joining material.

7. A method according to claim 5 or 6, wherein the reinsertion depth of said second tool (340B) is deeper than its insertion depth before its withdrawal at said second position (P4), and the insertion depth of said second tool (340B) is thereafter reduced to bring it to the insertion depth of said second rotary tool (340B) before travel is stopped at said second position.

8. A method according to claim 1, wherein at said second position (P4), said first rotary tool (340A) is reinserted while rotating and while its travel continues, its insertion continuing until it reaches a predetermined insertion depth.

9. A method according to any one of claims 1 to 8, wherein after the friction stir welding, material is removed at said first and second positions (P1, P4) at said first joining line.

10. A method according to any one of claims 1 to 9, wherein an opening (210) exists in said abutting members (10, 20, 30, 40) at said first joining line between said first and second positions (P1, P4).

## Patentansprüche

1. Verfahren zur Herstellung eines Strukturkörpers mit folgenden Schritten:
Starten eines Reibrührverbindens mehrerer Elemente (10, 20, 30, 40), die Seite an Seite aneinander anstoßen, indem an zwei Verbindungslinien, die quer zur Richtung der Verbindungsbildung einen Abstand voneinander aufweisen, entsprechende Drehwerkzeuge (340) eingebracht werden und die Werkzeuge gemeinsam entlang der jeweiligen Verbindungslinien fortbewegt werden, um die Elemente entlang der Verbindungslinien zu verbinden,
das Reibrührverbinden an einer ersten Position (P1) an einer ersten der Verbindungslinien gestoppt wird, indem ein erstes (340A) der Werkzeuge (340) von der ersten Verbindungslinie zurückgezogen wird, wobei das erste Werkzeug (340A) fortfährt, das Fortbewegen eines zweiten (340B) der Werkzeuge (340) zu begleiten, das mit der Bildung einer Verbindung fortfährt, und
Wiedereinbringen des ersten Drehwerkzeugs (340A) in das Verbindungsmaterial an einer zweiten Position (P4), die einen Abstand von der ersten Position aufweist, um seinen Reibrührverbindungsvorgang wieder aufzunehmen.

2. Verfahren nach Anspruch 1, wobei das Fortbewegen der Werkzeuge (340) an der genannten zweiten Position (P4) gestoppt wird und das zweite Werkzeug (340B) von dem Verbindungsmaterial zurückgezogen wird und das erste und das zweite Werkzeug (340A, 340B) danach an der jeweiligen Verbindungslinie erneut eingebracht werden und das Reibrührverbinden durch Starten des Fortbewegens der Werkzeuge (340) erneut gestartet wird.

3. Verfahren nach Anspruch 2, wobei die Werkzeuge (340A, 340B) nach dem Zurückziehen des zweiten Werkzeugs (340B) an der zweiten Position (P4) dort wiedereingebracht werden.

4. Verfahren nach Anspruch 3, wobei die Wiedereinbringtiefe des zweiten Werkzeugs (340B) an der zweiten Position (P4) tiefer als seine Einbringtiefe unmittelbar vor seinem Zurückziehen an der zweiten Position (P4) ist.

5. Verfahren nach Anspruch 2, wobei sich die Position des Wiedereinbringens der Werkzeuge (340A, 340B) nach dem Zurückziehen des zweiten Werkzeugs (340B) an der zweiten Position (P4) bezüglich der Fortbewegungsrichtung stromaufwärts der zweiten Position (P4) befindet.

6. Verfahren nach Anspruch 4 oder 5, wobei ein Zurückziehen des zweiten Werkzeugs (340B) an einer dritten Position (P3) in Fortbewegungsrichtung stromaufwärts der zweiten Position (P4) gestartet wird und das Reibrührverbinden durch das zweite Werkzeug (340B) während seines Zurückziehens weitergeführt wird, und
an der zweiten Position (P4) das Fortbewegen der Werkzeuge (340) gestoppt und das Reibrührverbinden durch das zweite Werkzeug (340B) gestoppt wird, indem dieses vollständig von dem Verbindungsmaterial zurückgezogen wird.

7. Verfahren nach Anspruch 5 oder 6, wobei die Wiedereinbringtiefe des zweiten Werkzeugs (340B) tiefer als seine Einbringtiefe vor seinem Zurückziehen an der zweiten Position (P4) ist und die Einbringtiefe des zweiten Werkzeugs (340B) danach verringert wird, um sie auf die Einbringtiefe des zweiten Drehwerkzeugs (340B) vor dem Stoppen des Fortbewegens an der zweiten Position zu bringen.

8. Verfahren nach Anspruch 1, wobei das erste Drehwerkzeug (340A) wieder eingebracht wird, während es sich dreht und während sein Fortbewegen weitergeführt wird, wobei sein Einbringen weitergeführt wird, bis es eine vorbestimmte Einbringtiefe erreicht.

9. Verfahren nach einem der Ansprüche 1 bis 8, wobei nach dem Reibrührschweißen Material an der ersten und der zweiten Position (P1, P4) auf der ersten Verbindungslinie entfernt wird.

10. Verfahren nach einem der Ansprüche 1 bis 9, wobei in den aneinander anstoßenden Elementen (10, 20, 30, 40) an der ersten Verbindungslinie zwischen der ersten und der zweiten Position (P1, P4) eine Öffnung (210) vorliegt.

## Revendications

1. Procédé de fabrication d'un corps structurel, comportant les étapes consistant à :
démarrer une liaison par friction-malaxage d'une pluralité d'éléments (10, 20, 30, 40) venant en butée côte à côte, en insérant des outils rotatifs respectifs (340) au niveau de deux lignes de liaison qui sont espacées latéralement par rapport à la direction de formation de liaison, et déplacer les outils ensemble le long des lignes de liaison respectives pour relier les éléments le long des lignes de liaison,
dans une première position (P1), arrêter la liaison par friction-malaxage au niveau d'une première dasdites lignes de liaison par retrait d'un premier (340A) desdits outils (340) à partir de la première ligne de liaison, le premier outil (340A) continuant d'accompagner le déplacement d'un second (340B) desdits outils (340) continuant de former une liaison,
dans une deuxième position (P4) espacée de la première position, insérer à nouveau ledit premier outil rotatif (340A) dans le matériau de liaison pour recommencer son action de liaison par friction-malaxage.

2. Procédé selon la revendication 1, dans lequel, dans ladite deuxième position (P4), le déplacement desdits outils (340) est arrêté, et ledit second outil (340B) est retiré du matériau de liaison, et par la suite lesdits premier et second outils (340A, 340B) sont insérés à nouveau au niveau da chaque ligne de liaison, et une liaison par friction-malaxage est démarrée à nouveau en démarrant le déplacement des outils (340).

3. Procédé selon la revendication 2, dans lequel, après le retrait dudit second outil (340B), dans ladite deuxième position (P4), les outils (340A, 340B) sont insérés à nouveau dans ladite deuxième position (P4).

4. Procédé selon la revendication 3, dans lequel la profondeur de reinsertion dudit second outil (340B) dans ladite deuxième position (P4) est plus profonde que sa profondeur d'insertion immédiatement avant son retrait de ladite deuxième position (P4).

5. Procédé selon la revendication 2, dans lequel, après le retrait dudit second outil (340B), dans ladite deuxième position (P4), la position de réinsertion desdits outils (340A, 340B) est située en amont ladite deuxième position (P4) par rapport à la direction de déplacement.

6. Procédé selon la revendication 4 ou 5, dans lequel
dans une troisième position (P3) située en amont de la deuxième position (P4) dans la direction de déplacement, un retrait dudit second outil (340B) est démarré et la liaison par friction-malaxage par l'intermédiaire dudit second outil (340B) est poursuivie tout en retirant ledit second outil (340B),
dans ladite deuxième position (P4), le déplacement desdits outils (340) est arrêté, et la liaison par friction-malaxage par ledit second outil (340B) est arrêtée en retirant complètement ledit second outil rotatif (340B) à partir dudit matériau de liaison.

7. Procédé selon la revendication 5 ou 6, dans lequel la profondeur de réinsertion dudit second outil (340B) est plus profonde que sa profondeur d'insertion avant son retrait dans ladite deuxième position (P4), et la profondeur d'insertion dudit second outil (340B) est réduite par la suite poux l'amener à la profondeur d'insertion dudit second outil de rotation (340B) avant que le déplacement ne soit arrêté dans ladite deuxième position (P4).

8. Procédé selon la revendication 1, dans lequel, dans ladite deuxième position (P4), ledit premier outil rotatif (340A) est réinséré pendant rotation, et pendant que son déplacement continue, son insertion continua jusqu'à ce qu'il atteigne une profondeur d'insertion prédéterminée.

9. Procédé selon l'une quelconque des revendications 1 à 8, dans lequel, après le soudage par friction-malaxage, le matériau est enlevé dans lesdites première et deuxième positions (P1, P4) au niveau de ladite première ligne de liaison.

10. Procédé selon l'une quelconque des revendications 1 à 9, dans lequel une ouverture (210) existe dans lesdits éléments de butée (10, 20, 30, 40) au niveau de ladite première ligne de liaison située antre lesdites première et deuxième positions (P1, P4).
